Europäisches Patentamt

European Patent Office

Office européen des brevets

(11) Veröffentlichungsnummer: **0 287 039 B1**

# EUROPÄISCHE PATENTSCHRIFT

(45) Veröffentlichungstag der Patentschrift: **02.10.91**

(51) Int. Cl.5: **A61C 15/04**

(21) Anmeldenummer: **88105825.9**

(22) Anmeldetag: **12.04.88**

(54) **Spannbarer Faden, Behälter für diesen Faden und Halter zur Zahnpflege, insbesondere zur Reinigung von Zahnzwischenräumen.**

(30) Priorität: **17.04.87 AT 982/87**

(43) Veröffentlichungstag der Anmeldung:
**19.10.88 Patentblatt 88/42**

(45) Bekanntmachung des Hinweises auf die
Patenterteilung:
**02.10.91 Patentblatt 91/40**

(84) Benannte Vertragsstaaten:
**CH DE ES FR GB IT LI NL SE**

(56) Entgegenhaltungen:
**EP-A- 0 090 106**
**DE-A- 2 214 244**
**US-A- 3 642 011**
**US-A- 4 332 559**

(73) Patentinhaber: **Marxer, Rochus**
**Römerstrasse 217**
**FL-9485 Nendeln(LI)**

Patentinhaber: **Franck, Reinhard**
**Heiligkreuz 51**
**FL-9490 Vaduz(LI)**

(72) Erfinder: **Marxer, Rochus**
**Römerstrasse 217**
**FL-9485 Nendeln(LI)**
Erfinder: **Franck, Reinhard**
**Heiligkreuz 51**
**FL-9490 Vaduz(LI)**

(74) Vertreter: **Hefel, Herbert, Dipl.-Ing.**
**Egelseestrasse 65a**
**A-6800 Feldkirch-Tosters(AT)**

**Beschreibung**

Die Erfindung bezieht sich auf einen spannbaren Faden zur Zahnpflege, insbesondere zur Reinigung von Zahnzwischenräumen nach dem Oberbegriff des Anspruches 1, ferner auf einen Behälter zur Aufnahme von spannbaren Fäden nach dem Oberbegriff des Patentanspruches 2 und schließlich auf einen Halter nach dem Oberbegriff des Patentanspruches 11 zur bestimmungsgemäßen Verwendung des eingangs genannten Fadens.

Zur Zahnpflege, insbesondere zum Reinigen von Zahnzwischenräumen sind Geräte bekannt, die aus einem bügel- oder gabelartigen Halter bestehen, wobei die frei auskragenden Enden der Arme dieses Halters einen gespannten Seiden-oder Kunststoff-Faden tragen. Die freien Enden der Arme weisen je einen Schlitz auf, in welchen die endseitigen Abschnitte dieses Fadens eingelegt sind und zur Halterung des Fadens ist ein Teil desselben um den Arm mehrfach geschlungen (US-PS 2 650 598, US-PS 2 180 522, DE-OS 28 42 404). Anstelle einer solchen Umschlingung kann der vom Halter aufzunehmende Faden endseitig knotenartige Verdickungen aufweisen, die verhindern, daß der Faden aus den ihn aufnehmenden Schlitzen herausgleitet. Diese Knoten haben die Aufgabe von Widerlagern. Zur Regulierung oder Einstellung der Fadenspannung können die den Faden tragenden Arme des Halters mittels Schrauben oder Spreizglieder gegeneinander bewegt werden (US-PS 3 631 869). Es ist auch bekannt, den Griff des Halters hohl auszubilden (US-PS 4 508 125, US-PS 4 512 354, GB-PS 525 528) und in diesen Hohlraum einen Fadenwickel einzulegen, von welchem das jeweils benötigte Stück für die Zahnreinigung abgezogen wird. Schlußendlich sind noch jene bekannten Einrichtungen und Geräte zu verwenden, mit deren Hilfe die bereits erwähnten endseitigen knotenartigen Verdickungen an solchen Fäden hergestellt werden (US-PS 3 769 396 = DE-OS 22 14 244).

Von diesem Stand der Technik geht nun die Erfindung aus und ihr Ziel ist es erstens einmal, den spannbaren Faden so zu gestalten, daß er bedarfsgerecht bevorratet und für den Gebrauch aus dieser Bevorratung entnommen werden kann, zweitens den bevorrateten Faden hygienisch einwandfrei zu lagern und drittens den Halter selbst so auszubilden, daß er die ersterwähnten Maßnahmen bedarfsgerecht ergänzt und für die Entnahme des jeweils notwendigen Fadens aus der Bevorratung direkt eingesetzt werden kann, ohne daß umständliche Manipulationen durchgeführt werden müssen. Zur Lösung dieser Aufgabe schlägt die Erfindung vor, den spannbaren Faden so auszubilden, wie dies im kennzeichnenden Teil des Patentanspruches 1 definiert ist. Die einzelnen Fäden bilden dank dieses Vorschlages ein leiterartiges Gebilde, wobei diese einzelnen Fäden vorerst einmal alle unmittelbar zusammenhängen, und zwar über ihre kugelartigen Knoten und in der Folge bei Bedarf über die erwähnten Sollbruchstellen an diesen Knoten voneinander getrennt werden können.

Erfindungsgemäß ist ferner der Behälter für die bevorratende Aufnahme dieses leiterartigen Gebildes durch jene Merkmale gekennzeichnet, die Gegenstand des kennzeichnenden Teiles des Patentanspruches 2 sind. Auf diese Weise kann dieses leiterartige Gebilde hygienisch aufbewahrt werden, wobei es dank der Ausbildung des Behälters möglich ist, im Bedarfsfall je einen Faden zu entnehmen, was mit einem Halter erfindungsgemäß gelingt, der die kennzeichnenden Merkmale des Patentanspruches 11 aufweist.

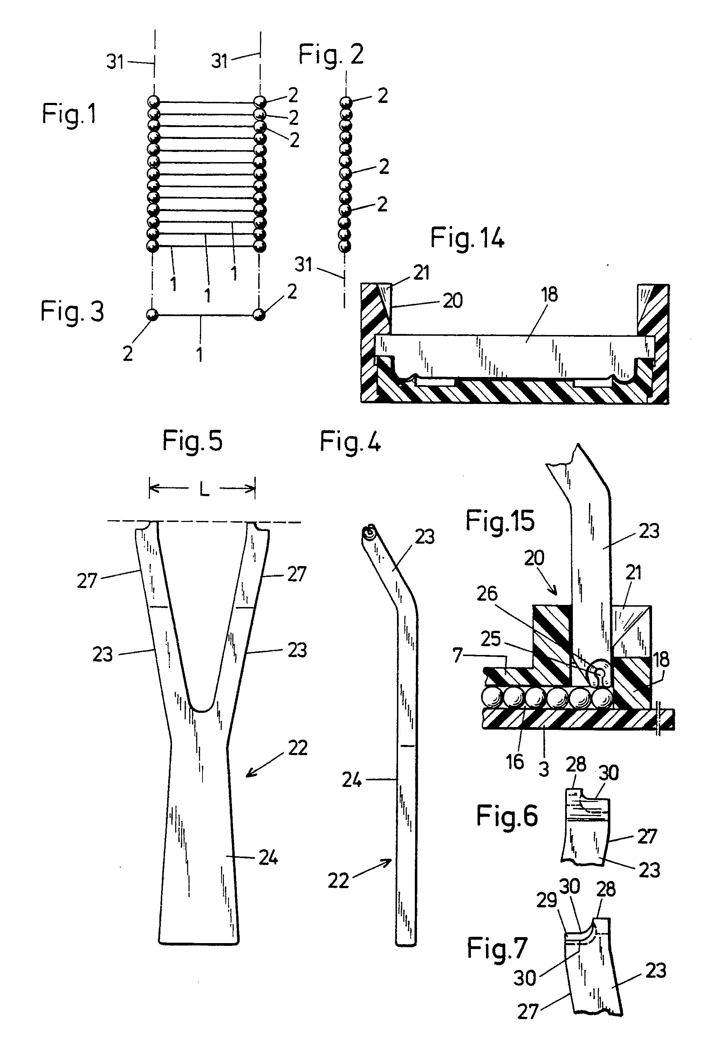

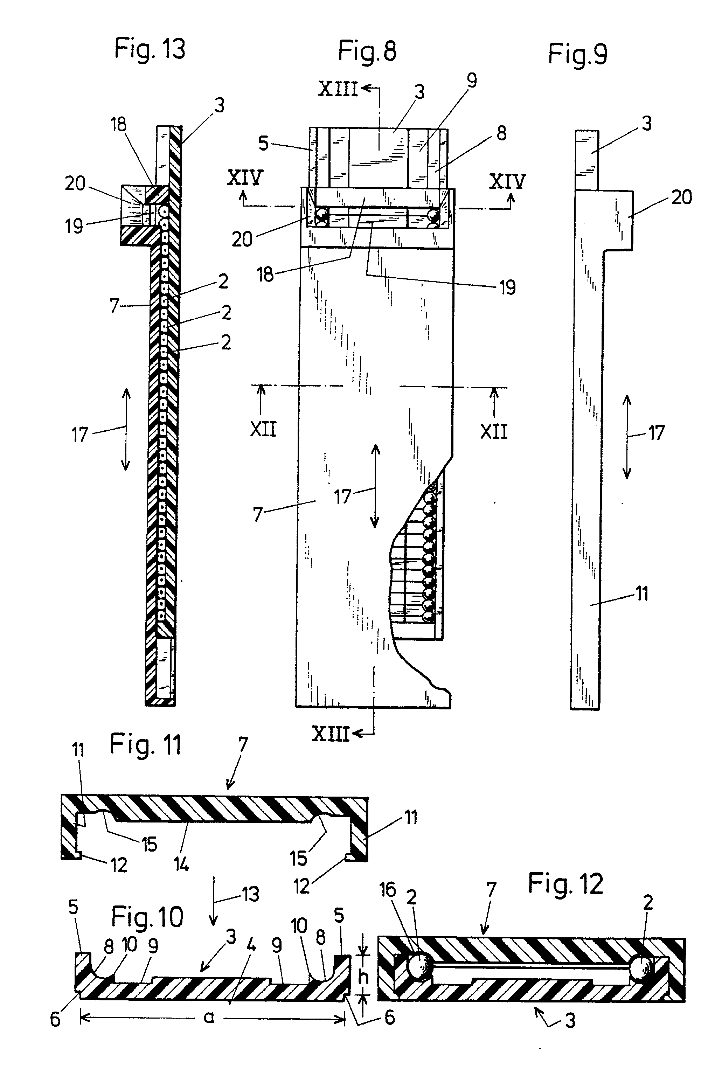

Um die Erfindung zu veranschaulichen, wird sie anhand der Zeichnung näher erläutert, ohne dadurch die Erfindung auf die dargestellten Ausführungsbeispiele einzuschränken. Es zeigen: Fig. 1 in Ansicht ein leiterartiges Fadengebilde, wie es für die Bevorratung gefertigt ist; Fig. 2 eine Seitensicht desselben und Fig. 3 eine Draufsicht; Fig. 4 eine Seitensicht eines Halters und Fig. 5 eine Ansicht desselben; die Fig. 6 und 7 von vorne und von hinten die freien Enden der Arme des Halters nach den Fig. 4 und 5, jedoch in einem gegenüber diesen Darstellungen vergrößerten Maßstab; Fig. 8 ist eine Ansicht des Behälters; Fig. 9 eine Seitensicht; Fig. 10 ein Querschnitt durch den Grundteil des Behälters; Fig. 11 ein Querschnitt durch den Deckelteil des Behälters; Fig. 12 einen Querschnitt durch den Behälter nach der Linie XII - XII in Fig. 8; Fig. 13 einen Längsschnitt durch den Behälter nach der Linie XIII - XIII in Fig. 8; Fig. 14 einen Querschnitt durch den Behälter nach der Linie XIV - XIV in Fig. 8 (die Darstellungen nach den Fig. 10, 11, 12 und 14 sind in einem gegenüber der Fig. 8 vergrößerten Maßstab wiedergegeben); Fig. 15 im Teilschnitt, wie mittels des Halters aus dem Behälter ein Faden entnommen wird.

Fig. 1 zeigt in Ansicht mehrere parallel zueinander und mit Abstand voneinander angeordnete Fäden 1 aus Seide oder einem synthetischen Material, die endseitig kugelartige Knoten 2 tragen. Diese aus Kunststoff gefertigten Knoten 2 sind alle miteinander verbunden, und zwar über eine querschnittsverjüngende Sollbruchstelle, die zwischen je zwei unmittelbar benachbarten Knoten 2 liegt. Die endseitig vorgesehenen Knoten 2 eines jeden Faden 1 liegen zu beiden Seiten desselben auf je einer Linie 31. Auf diese Weise bilden diese einzelnen, endseitig Knoten 2 tragenden Fäden 1 ein zusammenhängendes, leiterartiges Gebilde. Ein solches Gebilde kann mit herkömmlichen Mitteln gefertigt werden. Die Länge der einzelnen Fäden 1 entspricht ihrer Einspannlänge L (Fig. 5).

Um dieses an sich filigrane leiterartige Gebilde hygienisch und vor mechanischen Einflüssigen geschützt aufzubewahren, dient ein Behälter von schachtelförmiger Art, wie er, bzw. seine Einzelteile in den Fig. 8 bis 14 dargestellt ist. Dieser Behälter besitzt einen Grundteile 3 (Fig. 10) mit einem Boden 4 und Seitenlängswangen 5. Der Grundteil 3 weist an seinen beiden unteren Seitenlängskanten je einen stufenartig abgesetzten, nach innen gezogenen Absatz 6 auf, in welchen der Deckelteil 7 über seine gesamte Länge formschlüssig eingreift, wie im folgenden noch näher erläutert werden wird. Den Seitenlängswangen 5 innseitig benachbart und dazu parallel verlaufen rinnenartige Vertiefungen 8 und gegen die Mitte des Grundteiles 3 zu sind ferner ebenfalls parallel und seitlich der rinnenartigen Vertiefungen 8 Nuten 9 im Boden 4 vorgesehen. Die gegenüber dem innseitig liegenden Rand 10 der Vertiefung 8 gemessene Tiefe dieser Vertiefung 8 ist kleiner als der halbe Durchmesser der Knoten 2. Der Mittelabstand a der Vertiefungen 8 entspricht ungefähr der Länge eines Fadens 1 mit seinen Knoten 2.

Der Deckelteil 7 besitzt einen U-förmigen Querschnitt (Fig. 11) und an den freien unteren Enden seiner Seitenwangen 11 sind gegeneinandergerichtete, leistenartige Vorsprünge 12, die bei funktionsgerechtem Zusammenbau mit dem Grundteil 3 die Absätze 6 desselben formschlüssig hintergreifen (Fig. 12). Diese leistenartigen Vorsprünge 12 können schräg gerichtete, einander zugewandte Begrenzungsflächen oder Kanten aufweisen, so daß bei der Montage der Deckelteil 7 von oben her (Fig. 13) gegen den Grundteil 3 gedrückt werden kann, wodurch die Seitenwangen 11 etwas nach außen weichen und, so bald die Höhe h des Grundteiles 3 überfahren ist, in die Absätze 6 einrasten und so den gewünschten formschlüssigen Verbund herstellen. Bei einer praktischen Ausgestaltung werden die Wandstärken von Deckelteil 7 und Grundteil 3 gegenüber den Darstellungen in der Zeichnung erheblich dünnwandiger sein, die hier gezeigten relativ großen Wandstärken wurden nur aus Gründen der Anschaulichkeit gewählt.

Aus Fig. 11 in Verbindung mit den Fig. 10 und 12 ist auch erkennbar, daß in korrespondierender Lage zu den rinnenartigen Vertiefungen 8 im Grundteil 3 an der Innenseite 14 des Deckelteile 7 ebenfalls rinnenartige Vertiefungen 15 vorgesehen sind, wobei diese Vertiefungen 8,15 im Deckel- und Grundteil 7, 3 zusammen den röhrenförmigen Kanal 16 zur formschlüssigen Aufnahme der Knoten 2 bilden. Aus Fig. 13 ist ersichtlich, daß die innere Länge des Behälters ein Vielfaches des Durchmessers eines am Faden 1 endseitig angeordneten Knotens 2 beträgt, so daß innerhalb des Behälters in einer Linie oder Ebene zahlreiche solche Fäden untergebracht werden können. Deckelteil 7 und Grundteil 3 sind gegeneinander verschiebbar, diese Verschieberichtung ist in den Fig. 8, 9 und 13 durch den Pfeil 17 dargestellt. Der Deckelteil 7 besitzt ferner an seinem einen Ende eine den inneren Querschnitt des Grundteiles 3 zumindest im Bereich der rinnenartigen Vertiefungen 8 verschließenden Abschnitt 18 (Fig. 13, 14), und diesem Abschnitt 18 liegt benachbart eine schlitzartige Öffnung 19 im Deckelteil 7, die sich über dessen Breite erstreckt und die mindestens so lang ist wie die Länge des Fadens 1 mit seinen endseitigen Knoten 2. Die Breite der schlitzartigen Öffnung 19 im Deckelteil 7 entspricht mindestens dem Durchmesser eines Knotens 2 am Ende eines Fadens 1. Nach oben hin geht die schlitzartige Öffnung 19 in einen Einführschacht 20 über, wobei zumindest die die Schmalseiten 21 des Einführschachtes 20 bildenden Innenwandungen gegen die schlitzartige Öffnung 19 hin konvergierend verlaufen.

Übergreift beim gezeigten Ausführungsbeispiel (Fig. 12) der Deckelteil 7 mit seinen Seitenwangen 11 formschlüssig den Grundteil 3, so ist es möglich, den Deckelteil so auszubilden, daß der Querschnitt durch den Deckelteil eine umfangsgeschlossene Kontur zeigt und der Grundteil zur Gänze umfangsseitig vom Deckelteil umschlossen ist und Deckelteil und Grundteil auf diese Weise eine Schiebeschachtel nach Art einer Streichholzschachtel darstellen.

In den vorerst unverschlossenen, also offenen Grundteil 3 wird ein leiterartiges Gebilde, das aus den Fäden 1 und den Knoten 2 besteht (Fig. 1 bis 3) eingelegt, wobei die Knoten 2 von den rinnenartigen Vertiefungen aufgenommen werden (Fig. 12). Die Länge dieses leiterartigen Gebildes wird so gewählt, daß dieser Grundteil über seine ganze Länge mit diesem leiterartigen Gebilde belegt ist. Dann wird der Deckelteil 7, wie schon oben erläutert, aufgedrückt, damit ist der Behälter gefüllt und für seinen bestimmungsgemäßen Einsatz bereit.

In den Fig. 4 und 5 ist nun noch ein Halter 22 dargestellt, der aus dem Handgriff 24 besteht und den beiden, sich gabelartig erstreckenden Arme 23, die zwischen sich den Faden aufzunehmen haben, hier in Fig. 5 durch eine strichlierte Linie angedeutet. Von den freien Stirnseiten dieser Arme 23 gehen Schlitze 25 aus, die in außenseitig angeordneten schalenartigen Vertiefungen 26 liegen. Ferner ist aus den Darstellungen nach den Fig. 6 und 7 ersichtlich, daß die schalenartigen Vertiefungen 26 gegenüber den außenseitigen Kanten 27 der Arme 23 gegen die Mitte der gabel- oder bügelartig angeordneten Arme hin versetzt sind, und die gegenüber dem äußeren Ende 28 zurückversetzten, seitlich außen an die schalenartigen Vertiefungen 26 angrenzenden Absatzflächen 29 konkav gewölbt sind und die die Absatzflächen 29 begrenzenden, zueinander im wesentlichen parallelen Ränder 30 nach Art von Schneiden scharfkantig ausgebildet sind.

Fig. 15 veranschaulicht nun im Teilschnitt durch den Einführschacht 20 die Aufnahme eines Fadens 1 mit dem Halter 22. Der Grundteil 3 ist dabei gegenüber dem Deckelteil 7 so weit vorgeschoben, daß der querverlaufende Abschnitt 18 des Deckelteiles 7 an den Knoten 2 des erstens Fadens anliegt. Nun werden die gabelartig ausgebildeten Arme 23 in den Einführschlitz 20 eingeschoben, wobei die schräg gerichteten Schmalseiten 21 des Einführschlitzes die Arme 23 in ihrer Gabelebene etwas zusammendrücken und so den Abstand der freien, die Schlitze 25 aufweisenden Enden etwas verjüngen. Bei diesem Einführen gelangen die Absatzflächen 29 über die Knoten 2 des ersten am Abschnitt 18 anliegenden Fadens. Der Halter wird dabei nun soweit vorgeschoben, daß der scharfkantige Rand 30 an der Sollbruchstelle aufliegt. Wird der Halter 22 nun ruckartig weiter vorgedrängt, so trennt die scharfe Kante 30 die eingangs erwähnte Sollbruchstelle durch und der Halter kann mit seinen freien Enden hinreichend tief eindringen, da die Nuten 9 die freien Enden der Arme aufzunehmen vermögen. Dadurch gelangen die Knoten 2 des ersten Fadens, der am Abschnitt 18 anliegt, in die schalenartigen Vertiefungen und der die Knoten verbindende Faden durch den Schlitz 25. Wird nun der Halter aus dem Einführschacht 20 zurückgezogen, so nimmt er diesen ersten Faden mit und, sobald der Einführschacht 20 verlassen ist, wandern die Arme 23 bzw. deren freien Enden nach außen und spannen dadurch den Faden, der somit für seinen bestimmungsgemäßen Einsatz bereit ist.

Bei der vorliegenden Erörterung der Erfindung wurde von Deckelteil und Grundteil gesprochen zusammen mit ihren besonderen konstruktiven Elementen. Es liegt im Rahmen der Erfindung, diese Elemente gegeneinander auszutauschen und beispielsweise die relativ tiefen rinnenartigen Vertiefungen 8 im Deckelteil 7 vorzusehen bzw. umgekehrt. Aufgrund der hier gewählten Tiefe der Vertiefungen 8 ist erkennbar, daß der Faden 1 zwischen seinen endseitigen Knoten innerhalb des Behälters sozusagen frei gespannt verläuft (Fig. 12). Ist der am Abschnitt 18 anliegende Faden entnommen, so wird der Grundteil 3 gegenüber dem Deckelteil 7 weiter vorgeschoben, bis der nächste Faden bzw. dessen Knoten 2 wieder am Abschnitt 18 anliegt. Dieser Abschnitt 18 bildet sozusagen ein Widerlager, das verhindert, daß die Knoten des jeweils ersten Fadens ausweichen, wenn der Halter in den Einführschacht 20 eingefahren und in diesen eingedrückt wird. Aufgrund der Nuten 9 seitlich der rinnenartigen Vertiefungen 8 kann der Halter trotz seiner Ausbildung, wie in den Fig. 6 und 7 dargestellt, hinreichend weit eingefahren werden, so daß die kugelartigen Knoten des jeweils ersten Fadens sicher und verläßtlich gefaßt werden.

Wenn in den vorstehenden Unterlagen von kugelartigen Knoten gesprochen wird, so ist dieser Begriff ganz allgmein als Verdickung gegenüber dem Fadenmaterial zu verstehen.

## Patentansprüche

1. Spannbarer Faden (1) zur Zahnpflege, insbesondere zur Reinigung von Zahnzwischenräumen, der in einem gabel- oder bügelartigen Halter anzubringen ist, wobei die Enden des Fadens Verdickungen (2), vorzugsweise in Form von kugelartigen Knoten aufweisen, welche bei der Anbringung des Fadens im Halter an dessen gabel- oder bügelartigen Armen außen als Widerlager anliegen, dadurch gekennzeichnet, daß zu Bevorratungszwecken eine Vielzahl von spannbaren Fäden (1) von einer Länge, die der Einspannlänge (L) etwa entspricht, mit Abstand voneinander und parallel zueinander angeordnet sind, wobei die endseitig vorgesehenen Knoten (2) eines jeden Fadens (1) zu beiden Seiten desselben auf je einer Linie (31) liegen und die jeweils einander unmittelbar benachbarten Knoten (2) einer Seite dieser Fadenreihe miteinander über eine querschnittsverjüngte Sollbruchstelle verbunden sind (Fig. 1).

2. Behälter zur Aufnahme von spannbaren Fäden zur Zahnpflege nach Anspruch 1, dadurch gekennzeichnet, daß er einen schachtelartigen, einen Boden (4) und zueinander parallele Seitenlängswangen (5) aufweisenden Grundteil (3) besitzt und den Seitenlängswangen (5) innenseitig benachbart und dazu parallel verlaufende, rinnenartige Vertiefungen (8) vorgesehen sind und der Grundteil (3) von einem Deckelteil (7) entlang der Seitenlängswangen (5) formschlüssig übergriffen ist, wobei Grundteil (3) und Deckelteil (7) relativ zueinander und parallel zur Ebene des Bodens (4) des Grundteiles (3) verschiebbar sind, wobei der Deckelteil (7) an seinem einen Ende eine den inneren Querschnitt des Grundteiles (3) zumindest im Bereich der rinnenartigen Vertiefung (8) verschließenden Abschnitt (18) aufweist und diesem Abschnitt (18) benachbart eine schlitzartige Öffnung (19) im Deckelteil (7) vorgesehen ist, deren Länge mindestens der Länge des spannbaren Fadens (1) mit seinen endseitigen Knoten entspricht und die Innenseite (14) des Deckelteiles (7) mit den rinnenartigen Vertiefungen (8) im Grundteil (3) einen Kanal (16) zur formschlüssigen Aufnahme der endseitigen, miteinander über Sollbruchstellen verbundenen Knoten (2) der spannbaren Fäden (1) begrenzt.

3. Behälter nach Anspruch 2, dadurch gekennzeichnet, daß parallel und seitlich der rinnenartigen Vertiefungen (8) zur Aufnahme der Knoten (2) der Fäden (1) Nuten (9) verlaufen.

4. Behälter nach Anspruch 2, dadurch gekennzeichnet, daß die Breite der schlitzartigen Öffnung (19) im Deckelteil (7) mindestens dem Durchmesser eines Knotens (2) am Ende eines Fadens (1) entspricht.

5. Behälter nach Anspruch 2 oder 4, dadurch gekennzeichnet, daß die schlitzartige Öffnung (19) nach oben hin in einen Einführschacht (20) übergeht.

6. Behälter nach Anspruch 5, dadurch gekennzeichnet, daß zumindest die die Schmalseiten (21) des Einführschachtes (20) bildenden Innenwandungen gegen die schlitzartige Öffnung (19) hin konvergierend verlaufen.

7. Behälter nach Anspruch 2, dadurch gekennzeichnet, daß der Grundteil an seinen beiden unteren Seitenlängskanten je einen stufenartig abgesetzten, nach innen gezogenen Absatz (6) aufweist, in welchen der Deckelteil (7) vorzugsweise über seine gesamte Länge formschlüssig eingreift.

8. Behälter nach Anspruch 2, dadurch gekennzeichnet, daß der Querschnitt durch den Deckelteil eine umfangsgeschlossene Kontur zeigt und der Grundteil zur Gänze umfangsseitig vom Deckelteil umschlossen ist und Deckelteil und Grundteil auf diese Weise eine Schiebeschachtel nach Art einer Streichholzschachtel darstellen.

9. Behälter nach Anspruch 2, dadurch gekennzeichnet, daß seine innere Länge ein Vielfaches des Durchmessers eines am Faden (1) endseitig angeordneten Knotens (2) beträgt.

10. Behälter nach Anspruch 2, dadurch gekennzeichnet, daß in korrespondierender Lage zu den rinnenartigen Vertiefungen (8) im Grundteil (3) an der Innenseite (14) des Deckelteiles (7) ebenfalls rinnenartige Vertiefungen (15) vorgesehen sind, wobei diese Vertiefungen (8,15) im Deckel- und Grundteil (7, 3) zusammen den röhrenförmigen Kanal (16) zur formschlüssigen Aufnahme der Knoten (2) bilden.

11. Halter (22) zur Aufnahme des spannbaren Fadens nach Anspruch 1, mit zwei gabelartigen Armen (23), deren freie Enden Schlitze (25) zur Aufnahme des Fadens aufweisen, dadurch gekennzeichnet, daß die Schlitze (25) in kugelschalenartigen, außenseitig liegenden Vertiefungen (26) vorgesehen sind, die gegenüber den außenseitigen Kanten (27) der Arme (23) gegen die Mitte der gabel- oder bügelartig angeordneten Arme hin versetzt sind, und die gegenüber dem äußeren Ende (28) zurückversetzten, seitlich außen an die schalenartigen Vertiefungen (26) angrenzenden Absatzflächen (29) konkav gewölbt sind und die die Absatzflächen (29) begrenzenden, zueinander parallelen Ränder (30) nach Art von Schneiden scharfkantig ausgebildet sind.

**Claims**

1. A tensible thread (1) for dental hygiene, in particular for cleaning interdental spaces, which thread is to be fixed in a fork-like or curved-handle-like holder, the ends of the thread having swellings (2), preferably in the form of spherical knots, which when the thread is fixed in the holder rest externally against its fork-like or curved-handle-like arms as an abutment,
characterized in that for stock provision purposes a plurality of tensible threads (1) whose length approximately corresponds to the span (L) are arranged at a distance and parallel, the end knots (2) of each thread (1) lying one on either side of the latter in a line (31) in each case and the knots (2), directly adjacent in each case, of one side of this thread row being connected to one another via a predetermined breaking point of narrowed cross-section (Fig. 1).

2. A receptacle for receiving tensible threads for dental hygiene in accordance with Claim 1, characterized in that it has a box-like base part (3) with a bottom (4) and with side walls (5) which are lateral, longitudinal and parallel, and trough-like cavities (8) are provided which are adjacent to the lateral longitudinal side walls (5) on the inner side and run parallel to the latter, and a cover part (7) engages over the base part (3) in a positive-locking manner along the lateral longitudinal side walls (5), the base part (3) and the cover part (7) being displaceable relative to one another and parallel to the plane of the bottom (4) of the base part (3), the cover part (7) having at one end a portion (18) obturating the inner cross-section of the base part (3) at least in the area of the trough-like cavity (8) and a slit-like opening (19) being provided in the cover part (7) and adjacent to this portion (18), the length of this opening at least corresponding to the length of the tensible thread (1) with its end knots and the inner side (14) of the cover part (7) defining, together with the trough-like cavities (8) in the base part (3), a channel (16) for the positive-locking reception of the end knots (2), connected to one another via predetermined breaking points, of the tensible threads (1).

3. A receptacle in accordance with Claim 2, characterized in that grooves (9) run parallel to and at the side of the trough-like cavities (8) for receiving the knots (2) of the threads (1).

4. A receptacle in accordance with Claim 2, characterized in that the width of the slit-like opening (19) in the cover part (7) corresponds at least to the diameter of a knot (2) at the end of a thread (1).

5. A receptacle in accordance with Claim 2 or 4, characterized in that upwards the slit-like opening (19) merges into an insertion shaft (20).

6. A receptacle in accordance with Claim 5, characterized in that at least the inside walls forming the narrow sides (21) of the insertion shaft (20) converge towards the slit-like opening (19).

7. A receptacle in accordance with Claim 2, characterized in that on each of its two lower lateral longitudinal edges, the base part has a shoulder (6) which is out-of-line in a step-like manner, is drawn inwards and into which the cover (7) part engages in a positive-locking manner and preferably over its entire length.

8. A receptacle in accordance with Claim 2, characterized in that the cross-section through the cover part shows a circumferentially closed contour and the circumference of the base part is totally enclosed by means of the cover part and in this way the cover part and the base part constitute a slide box in the manner of a matchbox.

9. A receptacle in accordance with Claim 2, characterized in that its inner length amounts to a multiple of the diameter of a knot (2) arranged at the end of the thread (1).

10. A receptacle in accordance with Claim 2, characterized in that in a corresponding position to the trough-like cavities (8) in the base part (3), trough-like cavities (15) are likewise provided on the inner side (14) of the cover part (7), these cavities (8, 15) in the cover and base parts (7, 3) together forming the pipe-shaped channel (16) for receiving the knots (2) in a positive-locking manner.

11. A holder (22) for receiving the tensible thread in accordance with Claim 1, with two fork-like arms (23) whose free ends have slits (25) for receiving the thread, characterized in that the slits (25) are provided in ball-cup-like, externally-lying cavities (26) which in relation to the outer edges (27) of the arms (23) are displaced towards the centre of the arms arranged in a fork-like or curved-handle-like manner, and the shoulder surfaces (29), which are displaced back in relation to the external end (28) and abut laterally and externally the ball-cup-like cavities (26), are concavely curved, and the parallel edges (30) bounding the shoulder surfaces (29) are sharp-edged in the manner of cutting edges.

**Revendications**

1. Fil (1) extensible pour soins dentaires, en particulier pour le nettoyage des interstices entre dents, qui doit être placé sur un support du type fourche ou étrier, les extrémités du fil comportant des surépaisseurs (2) de préférence sous la forme de noeuds sphériques, qui s'appuient, à la mise en place du fil sur le support, sur les bras de type fourche ou étrier de celui-ci à l'extérieur en butée, caractérisé en ce qu'à titre de précaution, un grand nombre de fils extensibles (1) de longueur correspondant sensiblement à la longueur (L) de tension, sont mis en place à une certaine distance les uns des autres et parallèlement les uns aux autres, les noeuds (2) prévus aux extrémités de chaque fil des deux côtés de celui-ci étant situés respectivement en ligne (31) et les noeuds (2) respectifs directement voisins d'un même côté de cette série de fils étant jointifs entre eux en un point de rupture de section réduite (figure 1).

2. Distributeur destiné à recevoir des fils extensibles pour les soins dentaires selon la revendication 1, caractérisé en ce qu'il possède une partie de base (3) du type boîte, comprenant un fond (4) et des parois longitudinales sur les côtés, parallèles entre elles et en ce que sont prévues à l'intérieur, adjacentes aux parois longitudinales (5) et se développant parallèlement à elles, des évidements (8) du type rigole et en ce que la partie de base (3) est recouverte géométriquement le long de ses parois longitudinales latérales (5) par un couvercle (7), la pièce de base (3) et le couvercle (7) étant mobiles relativement l'un par rapport à l'autre et parallèles au plan du fond (4) de la pièce de base (3), le couvercle (7) comportant à une de ses extrémités un tronçon (18) obturant la section transversale intérieure de la partie de base (3) au moins dans la zone de l'évidement (8) du type rigole et une ouverture (19) du type rainure étant prévue contiguë à ce tronçon (18) dans de couvercle (7), ouverture dont la longueur correspond au moins à la longueur du fil extensible avec ses noeuds terminaux et la face intérieure (14) du couvercle (7) avec les évidements (8) de type rigole dans la partie de base (3) délimitant un canal (16) pour recevoir géométriquement les noeuds (2) terminaux des fils extensibles (1) joints entre eux par leurs points de rupture.

3. Distributeur selon la revendication 2, caractérisé en ce que des rainures (9) se développent parallèlement et latéralement aux évidements (8) du type rigole pour recevoir les noeuds (2) des fils (1).

4. Distributeur selon la revendication 2, caractérisé en ce que la largeur de l'ouverture (19) du type rainure dans le couvercle (7) correspond au moins au diamètre d'un noeud (2) à l'extrémité d'un fil (1).

5. Distributeur selon l'une des revendications 2 ou 4, caractérisé en ce que l'ouverture (19) du type rainure se transforme en allant vers le haut en une gorge d'insertion (20).

6. Distributeur selon la revendication 5, caractérisé en ce que les parois intérieures formant les faces étroites (21) de la gorge d'insertion (20) se développent en convergeant vers l'ouverture (19) de type rainure.

7. Distributeur selon la revendication 2, caractérisé en ce que la partie de base comporte sur chacun de ses deux bords latéraux longitudinaux inférieurs un décrochement (6) réalisé en gradin enfoncé vers l'intérieur, dans lequel s'insère géométriquement le couvercle (7) de préférence sur toute sa longueur.

8. Distributeur selon la revendication 2, caractérisé en ce que la section transversale à travers le couvercle montre un contour de périmètre fermé et la pièce de base est enfermée en totalité sur ses faces périphériques par le couvercle et le couvercle et la pièce de base représentent de cette façon une boîte coulissante à la manière d'une boîte d'allumettes.

9. Distributeur selon la revendication 2, caractérisé en ce que sa longueur intérieure correspond à un multiple du diamètre d'un noeud (2) placé à l'extrémité du fil (1).

10. Distributeur selon la revendication 2, caractérisé en ce que dans la position correspondante aux évidements du type rigole (8) dans la partie de base (3), on a prévu sur la face intérieure (14) du couvercle (7) également des évidements de type rigole (15), ces évidements (8, 15) dans couvercle et pièce de base (7, 3) formant ensemble le canal en forme de tube (16) pour recevoir géométriquement les noeuds (2).

11. Support (22) pour recevoir un fil extensible selon la revendication 1, avec deux bras en forme de fourche (23) dont les extrémités libres comportent des rainures (25) pour recevoir le fil, caractérisé en ce que les rainures (25) sont prévues dans des évidements (26) en forme de coque sphérique, donnant du côté extérieur, qui sont décalés vis-à-vis des bords extérieurs (27) des bras (23) vers le milieu des bras disposés en fourche ou en étrier, et en ce que les faces d'arrêt (29) décalées vers l'arrière par rapport à l'extrémité extérieure (28), adjacentes du côté extérieur aux évidements (26) du type coque sont courbées de façon concave et en ce que les bords (30) délimitant les faces d'arrêt (29), parallèles entre eux sont réalisés à arêtes vives à la façon de couteaux.

Fig.1

Fig.2

Fig.3

Fig.14

Fig.5

Fig.4

Fig.15

Fig.6

Fig.7

Fig. 13

Fig. 8

Fig. 9

Fig. 11

Fig. 10

Fig. 12